# EUROPÄISCHE PATENTANMELDUNG

(11) **EP 1 923 186 A1**
(43) Veröffentlichungstag der Anmeldung: **21.05.2008**
(21) Anmeldenummer: 07115708.5
(22) Anmeldetag: 05.09.2007
(51) Int. Cl.: B28B 11/16, B28B 17/00, B23D 35/00

(54) **Vorrichtung zum Schneiden eines Stranges aus plastisch verformbarem Material, mit der Möglichkeit des Austausches einer Führungseinheit für wenigstens einen Schneidedraht**

(30) Priorität: 14.11.2006 DE 102006053604
(71) Anmelder: Hans Lingl Anlagenbau und Verfahrenstechnik GmbH & Co. KG, 86381 Krumbach (DE)
(72) Erfinder: Koch, Rainer, Nordstrasse 2 86381 Krumbach (DE)
(74) Vertreter: Körber, Martin Hans

(57) **Zusammenfassung**

Die Erfindung betrifft eine Vorrichtung (1) zum Schneiden eines Stranges (12) aus plastisch verformbaren Material, mit einem Längsförderer (13) zum Fördern des Stranges (12) durch einen Durchgang (14) der Vorrichtung (1), einer Längsführung (3), an der ein Längsführungsschieber (4) durch einen Längsantrieb (5) vor und zurück verschiebbar geführt ist, und einer am Längsführungsschieber (4) angeordneten ersten Querführung (7), an der ein erster Halter (8) für einen Schneidedraht (9) zum quer gerichteten Schneiden des Stranges (12) durch einen Querantrieb (16) hin und her verschiebbar geführt ist. Um die Anpassbarkeit der Vorrichtung (1) bezüglich des Schneidens zu verbessern, ist der Querantrieb (16) umbaubar für ein Verschieben eines zweiten Halters (54) in einer zweiten Querführung (53), die quer zur ersten Querführung (7) gerichtet ist.

## Beschreibung

Die Erfindung betrifft eine Vorrichtung zum Schneiden eines Stranges gemäß dem Oberbegriff des Anspruchs 1 oder 10 oder 14.

Eine solche Vorrichtung wird insbesondere bei der Herstellung von Formlingen aus Ton oder dergleichen, insbesondere für die Bauindustrie, z. B. von Ziegeln, eingesetzt.

Bei einer Vorrichtung dieser Art sind besondere Bewegungsbedingungen zu erfüllen, um einen sich quer zur Förderrichtung erstreckenden Schneidedraht während einer der Fördergeschwindigkeit des vorbewegten Stranges entsprechenden Längsbewegung quer von der einen Seite des Förderers zur anderen Seite hin zu bewegen. Hierdurch ist es möglich, den Strang während seiner Förderung zu schneiden. Dabei ist der Schneidedraht an seinen beiden Enden an einem Halter gehalten, der durch einen Längsantrieb und einen Querantrieb entsprechend bewegbar ist.

Es ist bereits vorgeschlagen geworden, auf beiden Seiten des Durchgangs für den Strang einen Halter jeweils für das zugehörige Ende eines Schneidedrahtes in einer horizontalen Längsführung und in einer vertikalen Querführung durch einen Längsantrieb und einen Querantrieb so zu bewegen, dass der Schneidedraht bei einer der Fördergeschwindigkeit des Stranges entsprechenden Längsbewegung von der einen Seite des Durchgangs zur anderen Seite und wieder zurück bewegt wird. Vor dieser Rück-Querbewegung ist es erforderlich, den vorher geschnittenen Strangabschnitt vom Strang zu spreizen, um eine Fuge zu erhalten, in der der Schneidedraht unschädlich zur Ausgangsposition zurück bewegt werden kann.

Bei dieser vorbekannten Vorrichtung ist somit auf jeder Seite des Durchgangs nicht nur ein Halter sondern auch ein Schwenkteil in Form eines Kniehebels jeweils mit einer Gelenkstange schwenkbar gelagert, die an ihrem einen Ende durch ein Schwenkgelenk mit dem zugehörigen Halter verbunden ist und an ihrem anderen Ende mit dem Schwenkteil schwenkbar verbunden ist. Die Schwenkebene dieses Gelenkstangen-Antriebs erstreckt sich vertikal und parallel zur Längsrichtung des Durchgangs.

Ein weiterer Nachteil der bekannten Vorrichtung besteht darin, dass die Wirksamkeit der auf beiden Seiten des Durchgangs vorhandenen Halter und Querantriebe auf eine die Angriffstellen zwischen den Gelenkstangen und den Haltern schneidende vertikale Querebene beschränkt ist. Hierdurch lässt sich zwar eine bezüglich der Förderrichtung kurze Konstruktion für den Querantrieb erreichen, jedoch ist die Führung des Halters bezüglich seiner Querbewegung erschwert, und der Halter neigt in der Querführung zum Verkannten. Dies führt wiederum zu Funktionsstörungen und einer großen Belastung der Führungsflächen sowie zu einem großen Verschleiß, der die Lebensdauer verringert. Es wäre zwar denkbar, die Führungssituation dadurch zu verbessern, dass die Querführung verhältnismäßig lang ausgebildet wird, jedoch führt dies zu einer beträchtlichen Vergrößerung der Konstruktion in der Querrichtung der Vorrichtung.

Der Erfindung liegt die Aufgabe zu Grunde, bei einer Vorrichtung der im Oberbegriff des Anspruches 1 oder 14 angegebenen Arten ihre Anpassbarkeit bezüglich des Schneidens zu verbessern.

Diese Aufgabe wird durch die Merkmale des Anspruchs 1 oder 14 gelöst. Vorteilhafte Weiterbildungen der Erfindung sind in den zugehörigen Unteransprüchen beschrieben.

Bei der erfindungsgemäßen Vorrichtung gemäß Anspruch 1 ist der Querantrieb umbaubar für ein Verschieben eines zweiten Halters in einer gegen die erste Querführung austauschbaren zweiten Querführung, die quer zur ersten Querführung gerichtet ist.

Bei der erfindungsgemäßen Vorrichtung gemäß dem unabhängigen Anspruch 14 sind ein die erste Querführung aufweisender erster getragener Führungsträger und ein diesen tragender Führungsträger durch eine zwischen Ihnen verlaufende Teilungsfuge geteilt und durch eine lösbare Befestigungsvorrichtung miteinander verbunden, die miteinander korrespondierende Befestigungselemente am tragenden Führungsträger und am ersten getragenen Führungsträger aufweist, wobei der tragende Führungsträger wenigstens ein Befestigungselement zum lösbaren Befestigen eines zweiten getragenen Führungsträgers mit einer zweiten Querführung für einen zweiten Halter aufweist, und wobei die zweite Querführung quer zur ersten Querführung gerichtet ist. Bei dieser Ausgestaltung ist die Vorrichtung für eine gegebenenfalls geplante Nachrüstung mit einem unterschiedlichen Führungsträger vorgefertigt, der durch einen Austausch der Führungsträger montierbar ist.

Beide erfindungsgemäßen Vorrichtungen gemäß Anspruch 1 und 14 sind in zweierlei Hinsicht verbessert. Die erfindungsgemäße Vorrichtung gemäß dem Anspruch 1 ist der Querantrieb so ausgebildet, dass er durch einen Umbau bzw. eine Ummontage so veränderlich ist, dass er zum Antrieb eines zweiten Halters in einer zweiten Querführung geeignet ist, die quer zur ersten Querführung gerichtet ist, wodurch nicht nur die angestrebten unterschiedlichen Schnittrichtungen erreicht werden, sondern wodurch es auch möglich ist, die Vorrichtung mit jeweils einem von zwei Haltern für quer zueinander gerichtete Schnittrichtungen einzurichten. Die Schnittrichtungen sind vorzugsweise etwa horizontal und etwa vertikal.

Im Rahmen der Erfindung kann der zweite Halter mit der Vorrichtung verkauft und vertrieben werden, oder der zweite Halter kann auch durch eine Nachbestellung nachgeliefert werden. Wesentlich ist, dass die Vorrichtung so vorgefertigt ist, dass sie sich für den Austausch des ersten Halters gegen den zweiten Halter durch Vorfertigung eignet.

Es ist somit möglich, bei der Montage der Vorrichtung zu bestimmen, ob eine von zwei möglichen getragenen Führungsträgern montiert werden soll, die sich durch unterschiedliche Querführungen unterscheiden und z. B. für eine horizontale Schneiderichtung oder eine vertikale Schneiderichtung eingerichtet sind. Dies ist möglich, weil der tragende Führungsträger Befestigungselemente aufweist, zu denen beide getragene Führungsträger wahlweise passen.

Es ist außerdem möglich, eine bereits im Betrieb befindliche Vorrichtung mit einem unterschiedlichen getragenen Führungsträger umzurüsten. Es zeigt sich somit, dass die erfindungsgemäße Vorrichtung wahlweise an beide getragenen Führungsträger anpassbar ist, wobei jedoch bei der Auslieferung der Vorrichtung nur einer der beiden getragenen Führungsträgern vorhanden zu sein braucht. Es können aber auch zugleich beide getragenen Führungsträger ebenfalls ausgeliefert werden, die dann wahlweise für einen Austausch zur Verfügung stehen.

Die erfindungsgemäße Ausgestaltung eignet sich somit sowohl für deren Erstmontage, nach der die Vorrichtung immer für die jeweilige Schnittrichtung eingerichtet bleibt, als auch für eine umrüstbare Vorrichtung.

Die erfindungsgemäße Vorrichtung ist auch dann vorteilhaft, wenn ein zweiter Halter nie zum Einsatz kommt. In einem solchen Fall ist der erfindungsgemäße Vorteil darin zu sehen, dass bei der erfindungsgemäßen Vorrichtung die Möglichkeit besteht, sie, z. B. in Serie, vorzufertigen und mit dem Halter der gewünschten Schnittrichtung zu vervollständigen, wobei die Möglichkeit erhalten bleibt, sie mit einem zweiten Halter umzurüsten und somit an eine von zwei möglichen Schnittrichtungen anzupassen, z. B. an eine etwa vertikale und eine etwa horizontale Schnittrichtung.

Für den Austausch der unterschiedlichen Schneidedraht-Halter sind vorzugsweise zwei separate Querführungsträger vorgesehen, die jeweils den zugehörigen Halter vormontiert aufweisen können oder nicht aufweisen können, weil der zugehörige Halter auch nach der Montage des jeweiligen Querführungsträgers an diesem montierbar ist. Wesentlich ist, dass die Vorrichtung einen Führungsträger aufweist, an dem beide Querführungsträger wahlweise anbaubar sind.

Die gewünschte Schnittrichtung kann z. B. von der Form und/oder dem Material des zu schneidenden Stranges bzw. Formlings abhängig sein. Es ist z. B. aus verschiedenen Gründen vorteilhaft, die Formlinge horizontal monodirektional oder horizontal bidirektional zu schneiden.

Durch gleichzeitiges Umbauen des Querantriebs lässt sich dieser wahlweise so umbauen, dass mit ihm der jeweilige Halter in der zugehörigen Querrichtung verschiebbar ist.

Ein vorteilhaftes Ausführungsbeispiel der Erfindung besteht darin, dass der eine Halter einstückig ausgebildet ist und eine in der Längsrichtung U-förmige Querschnittsform aufweist, und der andere Halter aus zwei seitlich in der Vorrichtung angeordneten Haltekörpern besteht, die jeweils mit einem eigenen Querantrieb vertikal bewegbar sind, wobei vorzugsweise nur ein Antriebsmotor für beide Querantriebe vorgesehen ist, die vorzugsweise wenigstens teilweise spiegelbildlich ausgebildet und angeordnet sind.

Die Erfindung bezieht sich auch auf besondere Ausgestaltungen des ersten und/oder zweiten Halters, die von selbständiger erfinderischer Bedeutung sind und am zugehörigen Halter angeordnete Längsstreben betreffen, die in der Längsrichtung voneinander beabstandete Befestigungsvorrichtungen für Schneidedrähte aufweisen und/oder eine Gelenkstange für ein zwischen den zugehörigen Halter bzw. Haltekörper und einer zugehörigen Gelenkschwinge bilden.

In dem Fall, in dem das Schwenkteil des Querantriebs nicht in der Längsrichtung der Vorrichtung hin und her bewegbar ist, bedarf es einer Längsführung zwischen dem einen Kurbeltrieb bildenden Schwenkteil und der mit dem jeweiligen Halter verschwenkbar verbundenen Gelenkschwinge.

Die erfindungsgemäße Ausgestaltung nach Anspruch 1 und 14 eignet sich vorzüglich für einen ersten Halter, der - in der Längsrichtung des Durchgangs gesehen - eine U-förmige Form mit einem Basisabschnitt und wenigstens zwei von dessen Enden abstehenden Schenkelabschnitten aufweist, wobei der Schneidedraht sich von dem einen Endbereich zum anderen Endbereich der Schenkelabschnitte erstreckt und die Enden des Schneidedrahtes an den Endbereichen befestigt sind.

Bei bekannten Vorrichtungen mit einem verhältnismäßig kurzen Halter für z. B. nur einen Schneidedraht ist die Wirksamkeit des Querantriebs des Halters auf eine vertikale Querebene beschränkt. Hierdurch lässt sich zwar in der Längsrichtung kurze Konstruktion für den Querantrieb erreichen, jedoch ist die Führung des Halters bezüglich seiner Querbewegung erschwert, und der Halter neigt in der Querführung zum Verkanten. Dies führt wiederum zu Funktionsstörungen und einer großen Belastung der Führungsflächen sowie zu einem großen Verschleiß, der die Lebensdauer verringert. Es wäre zwar denkbar, die Führungssituation dadurch zu verbessern, dass die Querführung verhältnismäßig lang ausgebildet wird, jedoch führt dies zu einer beträchtlichen Vergrößerung der Konstruktion in der Querrichtung der Vorrichtung.

Der Erfindung liegt deshalb im weiteren die Aufgabe zugrunde, bei einer Vorrichtung der im Oberbegriff des Anspruchs 10 angegebenen Art die Schneidleistung zu steigern und den Querantrieb in seinem am Halter angreifenden Bereich zu stabilisieren.

Diese Aufgabe wird durch die Merkmale des unabhängigen Anspruchs 10 gelöst. Vorteilhafte Weiterbildungen der Erfindung sind in zugehörigen Unteransprüchen beschrieben.

Bei der erfindungsgemäßen Vorrichtung gemäß Anspruch 10 sind die Halter in der Längsrichtung der Vorrichtung länglich ausgebildet und weisen mehrere in der Längsrichtung hintereinander angeordnete Befestigungsvorrichtungen für mehrere Schneidedrähte auf, wobei das zweite Gelenk durch zwei einen Längsabstand aufweisende Gelenke gebildet ist oder sich im wesentlichen über die gesamte Länge der Gelenkschwinge erstreckende Gleitflächen aufweist. Durch die Mehrzahl der vorhandenen Befestigungsvorrichtungen für Schneidedrähte kann der Halter mit mehreren Schneidedrähten bestückt werden bzw. sein, wodurch die Schneidleistung entsprechend größer wird und zwar sowohl bei einem Schneiden immer in die gleiche Seitenrichtung als auch beim sogenannten bidirektionalen Schneiden. Außerdem wird der Halter nicht punktuell in eine Querebene, sondern an zwei einen Längsabstand voneinander aufweisenden Angriffsstellen oder durch eine über seine im wesentlichen gesamte Länge wirksame Angriffsstelle angetrieben. Hierdurch ist der Halter stabil abgestützt, wodurch Verkantungen in der Querführung verhindert oder zumindest vermindert werden. Außerdem wird eine gleichmäßige Verteilung der Schnittkräfte über die Länge des Halters erreicht.

Alle erfindungsgemäßen Ausgestaltungen eignen sich gut in Kombination mit einer für ein bidirektionales Schneiden eingerichteten Vorrichtung, bei der ein Spreizen der abgeschnittenen Strangabschnitte nicht erforderlich ist und deshalb die Vorrichtung einfacher, kürzer und mit einem geringeren Steuerungsaufwand ausgebildet werden kann, oder für monodirektionales Schneiden immer nach einer Seite hin.

Nachfolgend werden vorteilhafte Ausgestaltungen der Erfindung an Hand von Ausführungsbeispielen und einer Zeichnung näher erläutert.
- Fig. 1: zeigt eine erfindungsgemäße Vorrichtung zum Schneiden eines Stranges aus einem plastisch verformbaren Material, insbesondere Ton, in Längsabschnitte, vorzugsweise Ziegel, mit einer ersten Führungseinheit, in der Rückansicht;
- Fig. 2: zeigt ein Doppel-Kurbelgetriebe der Vorrichtung in einer besonderen Funktionsstellung;
- Fig. 3: zeigt einen linken Bereich mit einem Querantrieb der Vorrichtung in abgewandelter Ausgestaltung in der Draufsicht;
- Fig. 4: die Vorrichtung gemäß Fig. 1 in abgewandelter Ausgestaltung;
- Fig. 5: die Vorrichtung gemäß Fig. 4 in der Draufsicht;
- Fig. 6: zeigt eine erfindungsgemäße Vorrichtung zum Schneiden eines Stranges aus plastisch verformbaren Material, insbesondere Ton, in Längsabschnitte, vorzugsweise Ziegel, in abgewandelter Ausgestaltung in der Rückansicht;
- Fig. 7: die Vorrichtung nach Fig. 6 in der Draufsicht;
- Fig. 8: die Vorrichtung gemäß Fig. 6 in abgewandelter Ausgestaltung;
- Fig. 9: die Vorrichtung nach Fig. 8 in der Draufsicht.

Bei den noch zu beschreibenden Ausführungsbeispielen sind gleiche oder vergleichbare Teile mit gleichen Bezugszeichen versehen.

Die Hauptkomponenten der vereinfacht dargestellten und in ihrer Gesamtheit mit 1 bezeichneten Vorrichtung sind ein Gestell 2, eine im oberen Bereich des Gestells 2 angeordnete Längsführung 3, an der ein Längsführungsschieber 4 durch einen Längsantrieb 5 vor und zurück bewegbar ist, eine erste Querführungseinheit 6, die ein lösbar befestigtes Teil des Längsführungsschiebers 4 ist und eine erste Querführung 7 aufweist, an der ein erster Halter 8 für wenigstens einen als Strichpunktlinie vereinfacht dargestellten Schneidedraht 9 quer, z. B. horizontal, zur Längsführung 3 hin und her bewegbar ist. Der Schneidedraht 9 ist in seinen Endbereichen durch jeweils eine lösbare Befestigungsvorrichtung 9a mit dem ersten Halter 8 verbunden.

Die Vorrichtung 1 dient dazu, einen Strang 12 aus plastisch verformbarem Material, z. B. Ton, in Längsabschnitte, insbesondere in Ziegel, zu schneiden. Dies erfolgt dadurch, dass der Strang 12 auf einem horizontalen Träger 13, z. B. auf einem Längsförderer oder Tisch durch die Vorrichtung 1 gefördert wird und durch den quer bewegbaren Schneidedraht 9 in die gewünschten Längsabschnitte geteilt wird. Der Strang 12 und der Träger 13 befinden sich in einem längs durchgehenden freien Durchgang 14 der Vorrichtung 1, dessen Längsachse mit 14a bezeichnet ist.

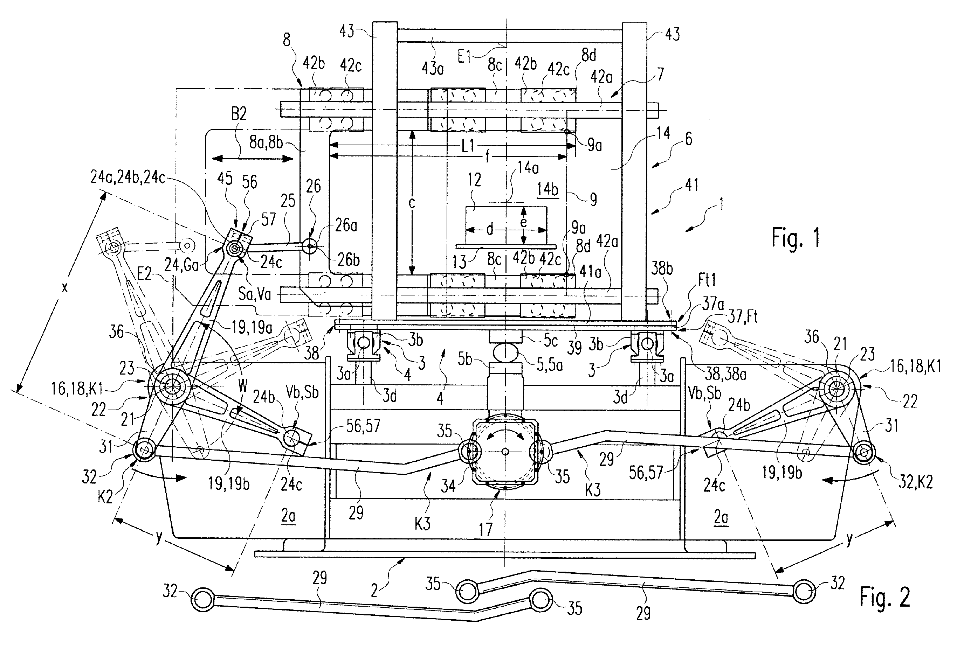

Wie Fig. 1 zeigt, ist der Halter 8 - in der Vorder- oder Rückansicht gesehen - z. B. U-förmig ausgebildet mit einem Basisabschnitt 8b und zwei sich von dessen Enden zu einer Seite hin erstreckenden Schenkelabschnitten 8c, die sich parallel zueinander erstrecken können. Die Innenlänge L1 der Schenkelabschnitte 8c sowie deren quer zum Durchgang 14 gerichteter Abstand c voneinander sind größer als die zugehörigen größtmöglichen horizontalen und vertikalen Querabmessungen d, e des Stranges 12. Der Schneidedraht 9 erstreckt sich quer zu den Schenkelabschnitten 8c und ist mit seinen Enden in deren Endbereichen 8d durch die vereinfacht dargestellten Befestigungsvomchtungen 9a befestigt. Der Abstand f zwischen dem Schneidedraht 9 und dem Basisabschnitt 8b ist größer ausgebildet als die größtmögliche Querabmessung d des Stranges 12.

Der erste Halter 8 und der Schneidedraht 9 sind in einer strichpunktiert dargestellten Quer-Endstellung bezüglich dem Strang 12 so quer versetzt angeordnet, dass der Basisabschnitt 8b und der Schneidedraht 9 sich auf einer Seite neben dem Strang 12 befinden. Beim Ausführungsbeispiel ist der Halter 8 in der Ansicht gemäß Fig. 1 mit dem Schneidedraht 9 in seiner Ausgangsstellung nach links versetzt angeordnet. Dieser Versatz ist dadurch vorgegeben, dass der Schneidedraht 9 an einem seitlichen Ende des Halters 8 befestigt oder befestigbar ist. In den in Fig. 1 dargestellten Quer-Endstellungen des Schneidedrahtes 9 ist somit das andere seitliche Ende des Halters 8, beim Ausführungsbeispiel der Basisabschnitt 8b, bezüglich der vertikalen Längsmittelebene E1 der Vorrichtung 1 bzw. ihres Durchgangs 14 zur gleichen Seite hin versetzt angeordnet wie der Schneidedraht 9, gemäß Fig. 1 z. B. nach links. Dieses seitlich versetzte Basisende 8a ist bezüglich der quer gegenüberliegenden Quer-Endstellung nach außen verlagert und eignet sich deshalb besonders gut als Antriebsende für einen noch zu beschreibenden Querantrieb für den Halter 8.

In den seitlichen Endstellungen des Schneidedrahtes 9 begrenzt dieser einen mittigen, für die jeweilige Breite d des Stranges 12 erforderlichen Teildurchgang 14b. Der Träger 13 befindet sich über dem unteren Schenkelabschnitt 8c des Halters 8.

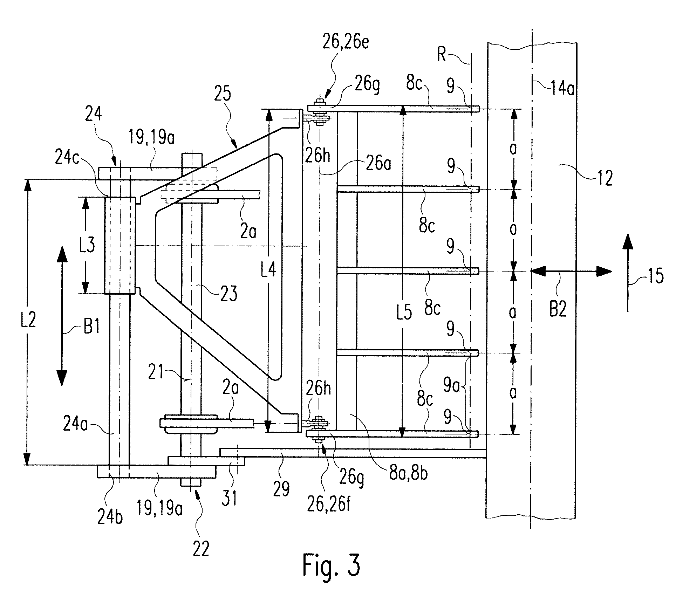

Die vor und zurück gerichtete Längsbewegung des Längsführungsschiebers 4 bzw. der ersten Querführungseinheit 6 ist in Fig. 3 mit B1 bezeichnet. Dagegen ist die Querbewegung des ersten Halters 8 in Fig. 1 mit B2 bezeichnet, siehe jeweils den zugehörigen Doppelpfeil. Die nach vorne gerichtete Förderrichtung des Stranges 12 auf dem Träger 13 ist in Fig. 3 mit dem einfachen Pfeil 15 verdeutlicht. In Fig. 3 sind der Querantrieb 16 und der erste Halter 7 in der äußeren Bewegungsstellung dargestellt, die in Fig. 2 strichpunktiert verdeutlicht ist.

Zum Schneiden des Stranges 12 wird der Schneidedraht 9 mit dem ersten Halter 8 durch einen den Halter 8 quer bewegenden ersten Querantrieb 16 mit einem Antriebsmotor 17 und wenigstens einem zwischen ihm und dem Halter 8 angeordneten Getriebe 18 auf die gegenüberliegende Seite des Teildurchgangs 14b bewegt, wie es Fig. 1 mit durchgezogenen Linien zeigt. Dabei ist der erste Halter 8 durch den Längsführungsschieber 4 und den Längsantrieb 5 an der Längsführung 3 und durch den Querantrieb 16 an der ersten Querführung 7 so bewegbar, dass er bei seiner Längsbewegung mit der Geschwindigkeit des Längsförderers 13 bzw. Stranges 12 und bei seiner Querbewegung mit einer wahlweisen Schnittgeschwindigkeit auf die gegenüberliegende Seite bewegt wird, wobei der Strang 12 bei dieser Hin-Querbewegung quer geschnitten wird.

Zur Rückkehr in die Ausgangsposition kann der erste Halter 8 so antreibbar sein, dass er nach einem Rückhub mit der Geschwindigkeit des Stranges 12 als Leerhub gleichzeitig vor und zur Ausgangsseite zurück bewegt wird, wobei der Schneidedraht 9 in einer durch Spreizen der Strangabschnitte herbeigeführte Schnittfuge zwischen dem oder den abgeschnittenen Strangabschnitten und dem verbleibenden Strang 12 zurückbewegt wird (monodirektionales Schneiden).

Alternativ kann der erste Halter 8 bezüglich seiner Rück-Querbewegung aber auch so gesteuert und bewegt werden, dass der Schneidedraht 9 bei seiner Rück-Querbewegung ohne eine Spreizung der Strangabschnitte ebenfalls einen Schnitt ausführt, wobei der Halter 8 auch hierbei vorher in der Längsführung 3 und durch den Längsantrieb 5 soweit längs dem Strang 12 zurückbewegt worden ist, dass diese Bewegungslänge ausreicht, um den Halter 8 wieder vor zu bewegen und gleichzeitig quer zu bewegen, so dass auch bei dieser Rück-Querbewegung der Strang 12 geschnitten werden kann. Das Schneiden bei der Hin-Querbewegung und der Rück-Querbewegung wird in der Fachsprache mit dem Fachwort "bidirektionales Schneiden" bezeichnet.

Auch bei der Rück-Querbewegung ohne oder mit einem Schneidevorgang wird der Schneidedraht 9 mit dem Halter 8 ebenfalls mit der Geschwindigkeit des Stranges 12 bzw. Längsförderers 13 bewegt.

Die vorbeschriebenen Bewegungsabläufe sind an sich bekannt und bedürfen deshalb keiner weiteren Beschreibung. Die Hin-Querbewegung B2, die Längsbewegung B1 und die Rück-Querbewegung B2 finden vorzugsweise in einander folgenden Schritten bzw. Zyklen statt.

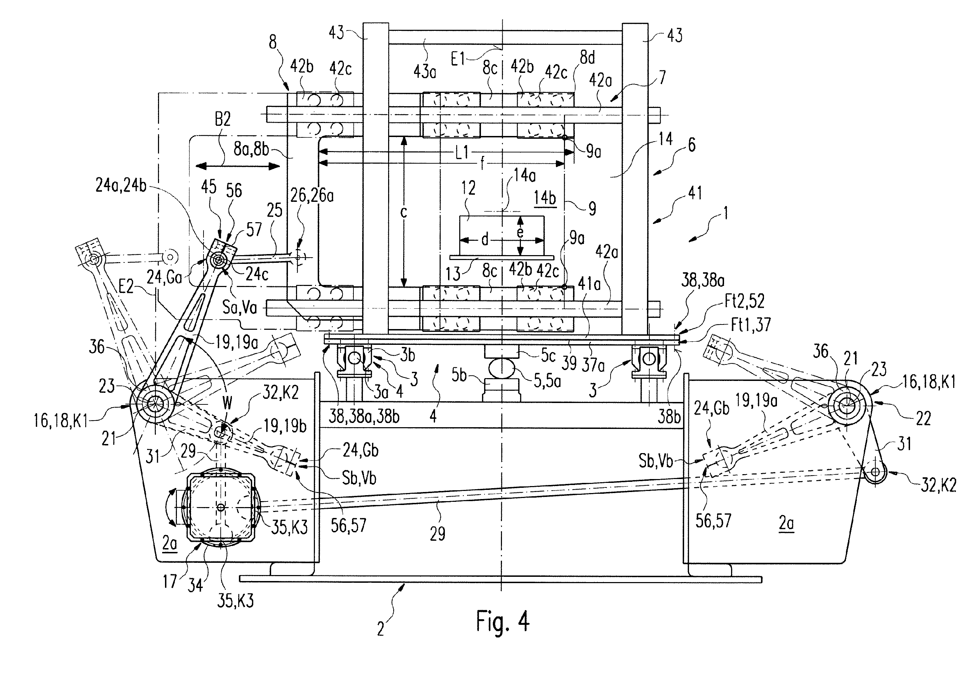

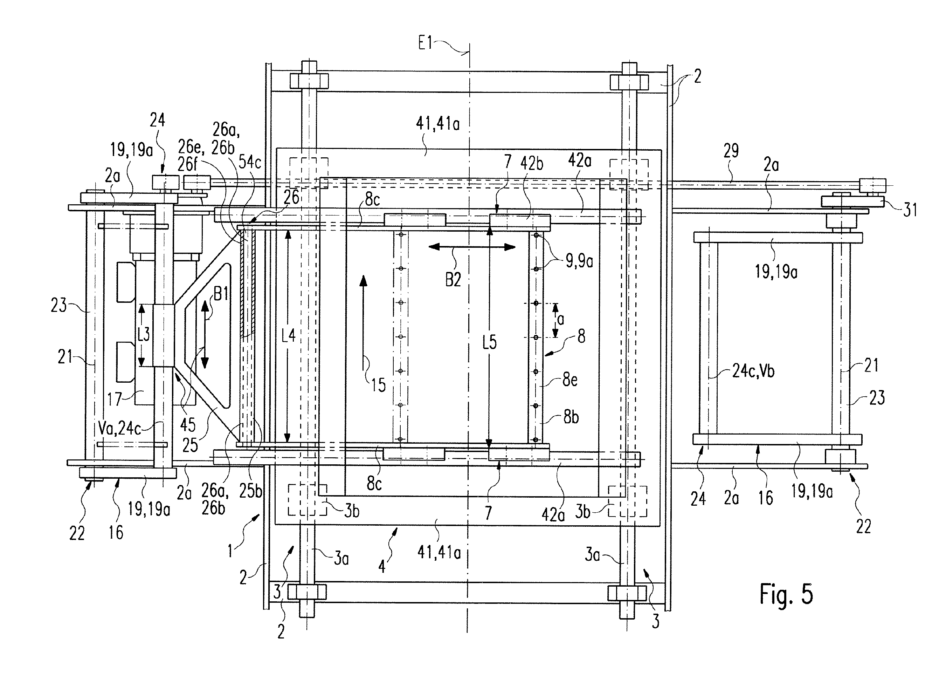

Nachfolgend wird der Querantrieb 16 näher beschrieben anhand der Fig. 1 und 3 beschrieben, wobei gemäß Fig. 3 die Vorrichtung 1 nur für den horizontalen Querantrieb 16 eingerichtet ist, weil die horizontalen Schwenkhebel 19a fehlen. Dies gilt auch für das Ausführungsbeispiel nach Fig. 4 und 5.

Das Getriebe 18 weist zum quer gerichteten Bewegen des ersten Halters 8 z. B. einen ersten Kurbeltrieb K1 mit einem Schwenkteil 19 auf, dass um eine sich etwa parallel zur Längsachse 14a erstreckende und bezüglich dem Gestell 2 seitlich versetzte und sich etwa unter dem unteren äußeren Eckenbereich des Halters 8 erstreckende Schwenkachse 21 in einem Schwenklager 22 hin und her schwenkbar gelagert ist, dass am Gestell 2 montiert und abgestützt ist, insbesondere an dessen zugehörigen Außenseite, z. B. an einer quer abstehenden Lagerwand 2a. Es ist somit der wenigstens eine Querantrieb 16 am Gestell 2 gelagert und abgestützt. Hierdurch ist der Halter 8 vom Querantrieb 16 nicht belastet und deshalb leicht und schnell bewegbar.

Beim vorliegenden Ausführungsbeispiel befindet sich die Schwenkachse 21 etwa in einer Höhe, die dem oberen Bereich des Gestells 2 bzw. der Höhenlage der Längsführung 3 entspricht, jedoch seitlich nach außen versetzt ist, vorzugsweise so weit versetzt ist, dass sie sich unter dem Antriebsende des Halters 8 befindet, wenn das Antriebsende sich in seiner äußeren Hubstellung befindet. Zur Lagerung kann ein Schwenkbolzen 23 dienen, auf dem das beim Ausführungsbeispiel durch einen ersten Schwenkhebel 19a gebildete Schwenkteil 19 hin und her schwenkbar gelagert und durch den Antriebsmotor 17 antreibbar ist. In einem radialen Abstand von der Schwenkachse 21 ist das Schwenkteil 19 durch ein erstes Gelenk 24 mit einem sich ebenfalls etwa parallel zur Längsachse 14a erstreckenden Gelenkbolzen 24a schwenkbar mit einer - wenigstens in der Vorder- bzw. Rückansicht der Vorrichtung 1 gesehen - stangenförmigen Gelenkschwinge 25 verbunden, die sich unter Berücksichtigung einer bogenförmigen Schwenkbewegung etwa horizontal erstreckt und mit ihrem abgewandeten Ende durch ein zweites Gelenk 26 mit einer sich ebenfalls parallel zur Längsachse 14a erstreckenden Gelenkachse 26a schwenkbar mit dem ersten Halter 8 verbunden ist, so dass die Gelenkschwinge 25 als Schub- und Zugelement für den Halter 8 funktionieren kann. Die Gelenkachse 24c des ersten Gelenks 24 erstreckt sich im Bereich der horizontal und quer gerichteten Projektion des ersten Halters 8, wobei ihr Abstand von der Schwenkachse 21 mit x bezeichnet ist.

Das erste Gelenk 24 oder gegebenenfalls auch das zweite Gelenk 26 ist eine lösbare Gelenkverbindung, vorzugsweise im Sinne einer Schnellschlussverbindung, so dass eine wahlweise Montage bzw. Demontage der Gelenkverbindung handhabungsfreundlich und schnell erfolgen kann. Das zweite Gelenk 26 weist z. B. einen Gelenkbolzen 26b auf, der am Halter 8 befestigt ist, und auf dem die Gelenkschwinge 25 mit einem Gelenkloch schwenkbar gelagert ist.

Zur Antriebsverbindung des Antriebsmotors 17 mit dem Schwenkteil 19 bzw. dem ersten Kurbeltrieb K1 kann ein zweiter Kurbeltrieb K2 mit einer mit dem Antriebsmotor 17 verbundenen Kurbelstange 29 und einem mit dem Schwenkteil 19 verbundenen Kurbelhebel 31 gebildet sein. Hierdurch ist es möglich, den Antriebsmotor 17 in einem insbesondere nach innen gerichteten Abstand vom Schwenklager 22 anzuordnen, insbesondere am Gestell 2, vorzugsweise darin etwa mittig. Die Kurbelstange 29 und der Kurbelhebel 31 sind durch ein drittes Gelenk 32 schwenkbar miteinander verbunden.

Zwischen dem Antriebsmotor 17 und der Kurbelstange 29 ist ein dritter Kurbeltrieb K3 mit einem Kurbelhebel 34, z. B. in Form einer Scheibe, vorgesehen, mit der die Kurbelstange 29 durch ein viertes Gelenk 35 verbunden ist.

Der Kurbelhebel 31 steht von der Nabe 36 des Schwenkteils 19 vorzugsweise nach unten ab, insbesondere auf einer das erste Gelenk 2 und das dritte Gelenk 32 verbindenden Geraden.

Der Längsführungsschieber 4 weist eine Schieberbasis 37, z. B. in Form einer Plattform, auf, mit der die erste Querführungseinheit 6 mit der ersten Querführung 7 durch eine lösbare Befestigungsvorrichtung 38 verbunden ist. Der somit die erste Querführung 7 tragende Längsführungsschieber 4 ist durch eine vorzugsweise horizontal verlaufende Teilungsfuge 39 in zwei Teile geteilt, nämlich der unteren Schieberbasis 37 und einem vorzugsweise darauf gesetzten ersten Querführungsträger 41, der durch die Befestigungsvorrichtung 38 mit der Schieberbasis 37 lösbar verbunden ist. Es können auf beiden Seiten der vertikalen Längsmittelebene E1 jeweils eine oder mehrere in der Längsrichtung hintereinander angeordnete Befestigungsvorrichtungen 38 vorgesehen sein. Die Schieberbasis 37 bildet somit einen tragenden Führungsträger Ft, der einen den ersten Querführungsträger 41 bildenden ersten getragenen Führungsträger Ft1 trägt.

Beim Ausführungsbeispiel weist die Längsführung 3 auf beiden Seiten der vertikalen Längsmittelebene E1 jeweils eine sich längs erstreckende Führungsstange 3a auf, die jeweils an ihren vorderen und hinteren Enden am Gestell 2 gelagert sind, z. B. in vom Gestell 2 nach oben ragenden Lagerstücken 3d. Der Längsführungsschieber 4 weist nach unten ragende Führungsstücke 3b mit Führungslöchern auf, mit denen die Schieberbasis 37 auf den Führungsstangen 3a verschiebbar sitzt. Beim Ausführungsbeispiel ist die Schieberbasis 37 durch eine horizontale Tragplatte 37a und die an deren Unterseite befestigten Führungsstücke 3b gebildet.

Der Querführungsträger 41 weist vorzugsweise eine ebenfalls horizontale Fußplatte 41a auf, mit der er auf die Schieberbasis 37 aufgesetzt und daran befestigt ist. Die wenigstens eine Befestigungsvorrichtung 38 ist durch miteinander korrespondierende Befestigungselemente 38a und 38b gebildet, die an der Schieberbasis 37 und dem ersten Querführungsträger 41 angeordnet sind und zueinander passen. Bei den Befestigungselementen 38a, 38b kann es sich jeweils z. B. um miteinander korrespondierende Löcher für eine diese durchfassende und in Fig. 1 jeweils durch eine Strichpunktlinie angedeutete Schraube gebildet sein.

Die erste Querführung 7 ist durch zwei übereinander am ersten Querführungsträger 41 befestigte Führungsstangen 42a gebildet, an denen der Halter 8 mittels Führungsstücken 42b, vorzugsweise mit Führungsrollen 42c, quer und horizontal verschiebbar ist, wobei die vorgenannten Führungselemente sich in der Höhe der Schenkelabschnitte 8c befinden und daran befestigt sind.

Die horizontalen Führungsstangen 42a können an auf beiden Seiten der Längsmittelebene E1 angeordneten aufrechten Tragstangen 43 des Querführungsträgers 41 befestigt sein, und zwar vorzugsweise an dessen Vorder- oder Rückseite. Hierdurch ist es möglich, die Führungsstangen 42a auf der Seite des Querantriebs 16 über die Tragstangen 43 hinaus ragen zu lassen und den Halter 8 über die dieser Seite zugeordnete Tragstange 43 hinaus zu führen und zu bewegen. Die Tragstangen 43 sind auf der Fußplatte 41a befestigt, erstrecken sich nach oben und können durch eine Quertraverse 43a stabilisiert sein.

Am Halter 8 ist eine gute Kraftübertragung dadurch gewährleistet, dass das zweite Gelenk 26 bezüglich der zugehörigen Querführung 7 im Bereich der Führungselemente 42a angeordnet ist, bzw. im Bereich der zum Einen horizontal und zum Anderen vertikal einander benachbarten Führungsstangen 42a angeordnet ist, vorzugsweise etwa im mittleren Bereich dazwischen, siehe die Figuren.

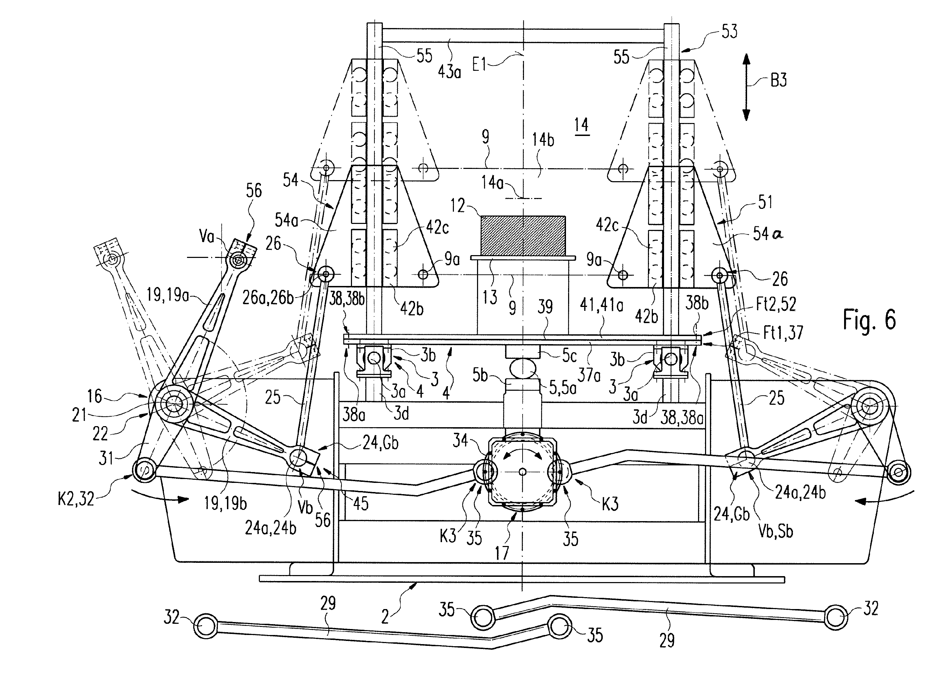

Der Längsantrieb 5 weist einen zwischen dem Gestell 2 und der Schlittenbasis 37 angeordneten Antriebsmotor 5a auf, der durch Verbindungsteile 5b, 5c mit der Schlittenbasis 37 und dem Gestell 2 verbunden ist, gemäß Fig. 1 und 6 z. B. in der Längsmittelebene E1 angeordnet ist. Der Antriebsmotor 5a ist so antreibbar oder steuerbar bzw. regelbar, dass die Geschwindigkeit des Längsführungsschiebers 4 der jeweiligen Geschwindigkeit des Stranges 12 entspricht. Er kann z. B. über einen Schrittgeber auf die Stranggeschwindigkeit synchronisiert sein.

Da der Längsführungsschieber 4 im Funktionsbetrieb längs hin und her bewegt wird und der Querantrieb 16 nicht, bedarf es einer Führungsstrecke in Form einer zweiten Längsführung 45 zwischen dem Halter 8 und dem Querantrieb 16, wobei zwei miteinander zusammenwirkende Teile längs gegeneinander verschiebbar sind, ohne die Antriebsfunktion zu verlieren.

In der vorstehenden Beschreibung ist der Halter 8 in einer bezüglich der Längsrichtung der Vorrichtung 1 kurzen Konstruktion beschrieben, bei der z. B. nur ein Schneidedraht 9 angeordnet ist. Bei einer solchen Ausgestaltung kann die Gelenkschwinge 25 - nicht nur in der Vorder- oder Rückansicht gesehen, sondern auch in der Draufsicht gesehen - stangenförmig ausgebildet sein, z. B. in Form einer Schub-und Zugstange.

Um die Leistungsfähigkeit der Vorrichtung 1 zu steigern und mehrere Stranglängsabschnitte gleichzeitig abschneiden zu können, können mehrere Schneidedrähte 9 am Halter 8 angeordnet sein, die einen Längsabstand a voneinander aufweisen und - längs der Längsachse 14a gesehen - in einer wahlweisen Position angeordnet sein können, sich z. B. horizontal, schräg oder etwa vertikal erstrecken können. Letzteres zeigt das Ausführungsbeispiel gemäß Fig. 3.

Im Rahmen der Erfindung kann bei allen Ausführungsbeispielen der Halter, hier der Halter 8, in der Längsrichtung kurz ausgebildet und zum Halten von z. B. nur einem Schneidedraht 9 ausgebildet sein. Dabei kann die Gelenkschwinge 25 durch eine Stange mit an beiden Ecken angeordneten Gelenkelementen gebildet sein.

Für mehrere, z. B. in einer Längsreihe R angeordnete Schneidedrähte 9 sind die Gelenkschwinge 25 und der Halter 8 somit länglich ausgebildet, siehe L4 und L5 in Fig. 3, wobei L5 oder auch L4 gleich oder etwas größer sein können als das Produkt aus dem oder den sich etwa parallel zur Längsachse 14a erstreckenden Abstand a bzw. Abständen a zwischen den Schneidedrähten 9 und der um 1 reduzierten Anzahl der Schneidedrähte 9. Bei einem solchen länglichen Halter 8 erstrecken sich mehrere obere und untere Schenkelabschnitte 8c in den Längsabständen a von einem längs durchgehenden Basisende 8a. Das Gelenk 26 zwischen dem Halter 8 und der Gelenkschwinge 25 kann bei einem länglichen Halter 8 und einer länglichen Gelenkschwinge 25 gemäß Fig. 5, 7 und 9 längs durchgehend ausgebildet sein, siehe längs durchgehende Gelenkflächen 26c, 26d auf der zugehörigen Gelenkstange 26b und in einer darauf gelagerten Gelenknabe 25b der Gelenkschwinge 25, oder es können zwei in einem Längsabstand L4 voneinander angeordnete Gelenke 26e, 26f vorgesehen sein, die z. B. durch einander überlappende Gelenkarme 26g, 26h gebildet sein können, wie es Fig. 3 zeigt.

Die Länge L4 der Gelenkschwinge 25 beträgt wenigstens etwa die Hälfte oder mehr als die Länge L5 des Halters 8. Vorzugsweise entspricht die Länge L4 etwa der Länge L5.

Beim Ausführungsbeispiel mit einer länglichen Gelenkschwinge 25 sind gemäß Fig. 3 zwei, z. B. durch einen ersten und einen zweiten Schwenkhebel 19a gebildete, Schwenkteile 19 in einem für die Länge der Längsführung 45 erforderlichen Längsabstand voneinander angeordnet und durch den Gelenkbolzen 23 oder die Nabe 36 miteinander verbunden, wobei sich die Gelenkbolzen 23 und 24a des Schwenkgelenks 22 und des ersten Gelenks 24 von dem einen zum anderen Schwenkhebel 19a erstrecken und daran gehalten sind. Die in Fig. 3 zwischen den Schwenkteilen 19 bzw. Schwenkhebeln 19a vorhandene Länge L2 ist so groß, dass die Gelenkschwinge 25 auf dem Gelenkbolzen 24a unter Berücksichtigung ihrer außenseitig z. B. verjüngten Länge L3 der Gelenknabe 24d des ersten Gelenks 24 den erforderlichen Längshub durchführen kann. Hierdurch ist die Längsführung 45 gebildet, z. B. im ersten Gelenk 24 bzw. Kniegelenk. Innenseitig kann die Gelenkschwinge 25 eine größere Länge aufweisen, siehe Länge L4.

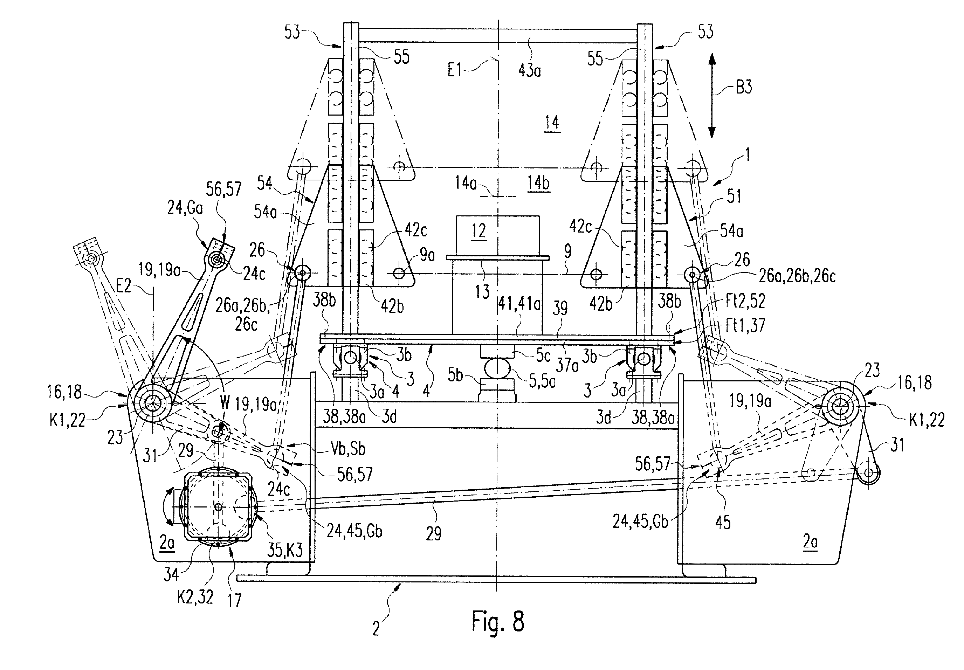

Es ist zur Erzielung einer möglichst gleich großen Geschwindigkeit beim quer gerichteten Bewegen des Halters 8 günstig, dass an dem bzw. den Schwenkteilen 19 bzw. an den Schwenkhebeln 19a angeordnete, z. B. durch das zugehörige Gelenkbolzenloch gebildete Gelenkteil 24b so zu positionieren, dass es bezüglich einer das Schwenklager 22 enthaltenden vertikalen Längsebene E2 nach beiden Seiten im wesentlichen gleich weit ausschwenkt. Entsprechend ist auch das erste Gelenk 24 bzw. der Schwenkhebel 19a in den Schwenkendstellungen oberhalb des Gelenks 22 positioniert. Bei den Ausführungsbeispielen befinden sich somit die Gelenke 24, 26 unter Vernachlässigung der vorhandenen Bogenbewegung im wesentlichen in ein und derselben Höhe, wobei die Gelenkstange bzw. Gelenkschwinge 25 sich im wesentlichen horizontal erstreckt. Die Gelenkstange bzw. - schwinge 25 ist aber auch bei einer Anordnung mit geringer Neigung bzw. Steigung funktionsfähig. Dies gilt sinngemäß auch für die Anordnung der Gelenke 24, 26 übereinander bzw. in der Vertikalen gemäß Fig. 6 und 8.

Das bzw. die Schwenkteile 19 bzw. der oder die Schwenkhebel 19a weisen somit ein schwenkteilseitiges erstes Verbindungselement Va zum Verbinden der Gelenkschwinge 25 im ersten Kurbelgelenk 24 auf. Das Verbindungselement Va ist beim Ausführungsbeispiel durch das Gelenkbolzenloch 24b oder den Gelenkbolzen 24a gebildet und ist mit dem korrespondierenden schwingenseitigen Verbindungselement Vb verbunden, das z. B. durch den Gelenkbolzen 24a oder das Gelenkloch 24b gebildet sein kann.

Durch die bei ihrer länglichen Ausbildung scheiben- bzw. rahmenförmige Konstruktion der Gelenkschwinge 25 ist sie besonders bezüglich in ihrer Ebene wirksamen Belastungsmomenten aber auch bezüglich quer zu ihrer Ebene wirksamen Belastungsmomenten stabilisiert. Außerdem lässt sich eine wenigstens der längs gerichteten Abmessung L3 der Gelenkschwinge 25 entsprechende Führungslänge der zweiten Längsführung 45 verwirklichen. Hierdurch werden Verkantungen in der Längsführung 45 verhindert, und der Verschleiß vermindert sowie die Lebensdauer vergrößert. Diese Führungsstabilisierung ist so groß, dass es - wie in Fig. 3 sichtbar - die sich etwa parallel zur Längsachse 14a erstreckende Länge L3 des dem Halter 8 abgewandten Endes der Gelenkschwinge 25 kürzer ausgebildet werden kann als das dem Halter 8 zugewandte Ende (siehe L4). Die soweit beschriebene Vorrichtung 1 eignet sich insbesondere dazu, den Strang 12 durch eine horizontale Bewegung des oder der Schneidedrähte 9 zu schneiden.

Bei einer länglichen Ausbildung sind somit die Gelenkschwinge 25 und der Halter 8 stabil abgestützt und gelagert. Deshalb ist der Halter 8 auch gegen ihn belastende Kippkräfte stabil gelagert, so dass die Querführung 7 entlastet wird bzw. mit geringerer Stabilität ausgebildet werden kann. Dabei ist ein Querantrieb 16 vorgesehen, der vorzugsweise etwa mittig zum Abstand L4 an der Gelenkschwinge 25 angreift, so dass auch im Bereich des Gelenks 24 eine stabile Abstützung bzw. Lagerung gewährleistet ist.

Das Ausführungsbeispiel gemäß Fig. 4 und 5 unterscheidet sich von den vorbeschriebenen Ausführungsbeispiel dadurch, dass der Antriebsmotor 17 nicht im Gestell 2 bzw. unter dem Strang 12 angeordnet ist, sondern außermittig, z. B. an einer Außenseite des Gestells 2, wo nicht nur die Zugänglichkeit verbessert ist, sondern wo der Antriebsmotor 17 auch einer Verschmutzungszone entzogen ist, in die beim Schneiden des Stranges 12 Schnittreste herunterfallen. Außerdem erhalten die Kurbelstangen 29 eine asymmetrische Anordnung. Der Kraftfluss wird, insbesondere bei horizontaler Schnittbewegung nicht durch das gesamte Abschneiderbett bzw. Gestell 2 geführt, wodurch die Unterkonstruktion weniger belastet wird. Es handelt sich um z. B. die in Fig. 4 linke Außenseite, an der sich auch das Schwenkteil 19 befindet, wobei der Antriebsmotor 17 unter dem Schwenkteil 19 angeordnet ist und z. B. an der Lagerwand 2a oder an einer von zwei abstehenden und ein Gehäuse bildenden Lagerwänden 2a angeordnet und befestigt sein kann. Bei dieser Abwandlung erstreckt sich die Kurbelstange 29 vom Gelenk 35 nach oben, wobei sie wesentlich kürzer ausgebildet ist.

Eine sowohl beim Ausführungsbeispiel gemäß Fig. 1 als auch Fig. 6 vorhandene zweite Kurbelstange 29, die in der Umfangsrichtung versetzt mit dem Kurbelhebel 34 gelenkig verbunden ist, und sich zur anderen Seite der Vorrichtung 1 erstreckt, wird weiter unten noch beschrieben.

Abgesehen von den abgewandelten Kurbeltrieb K3 entspricht die Ausgestaltung der Vorrichtung 1 gemäß Fig. 4 und 5 im wesentlichen der Ausgestaltung gemäß Fig. 1 und 3. Deshalb zeigt Fig. 5 - abgesehen vom Kurbeltrieb K3 - auch eine Draufsicht der Vorrichtung gemäß Fig. 1. Im Unterschied zur Teildraufsicht gemäß Fig. 3 befinden sich der erste Halter 8 und die Gelenkschwinge 25 jedoch in der nach innen bewegten Hubendstellung, wie es Fig. 1 in durchgezogenen Linien zeigt.

Es sind in der Praxis aber auch andere Schnittrichtungen gewünscht, z. B. eine vertikale Schnittrichtung, was u. a. durch das zu schneidende Material und/oder die Querschnittsform des Stranges 12 bedingt ist. Für diesen Fall ist der Vorrichtung 1 gemäß Fig. 6 eine zweite Querführungseinheit 51 mit einem zweiten Querführungsträger 52 austauschbar zugeordnet, an dem eine zweite Querführung 53 angeordnet ist, die sich quer zur ersten Querführung 7, hier vertikal, erstreckt und an der ein zweiter Halter 54 durch den umgebauten Querantrieb 16 zum Schneiden des Stranges 12 hin und her verschiebbar ist. Beim Ausführungsbeispiel ist die zweite Querführung 53 etwa vertikal ausgerichtet, siehe B3 in Fig. 6 und 8. Auch der zweite Querführungsträger 52 ist mittels einer Befestigungsvorrichtung 38 mit miteinander korrespondierenden Befestigungselementen 38a, 38b, von denen das eine Befestigungselement 38a an der Schieberbasis 37 und das andere Befestigungselement 38b am zweiten Querführungsträger 52 angeordnet ist, lösbar befestigt, wobei auf beiden Seiten der Längsmittelebene E1 jeweils eine oder mehrere in der Längsrichtung hintereinander angeordnete Befestigungsvorrichtungen 38 vorgesehen sein können. Vorzugsweise sind die Befestigungselemente 38a an der Schieberbasis 37 beider Befestigungsvorrichtungen 38 identisch, so dass die korrespondierenden Befestigungselemente 38b an beiden Querführungseinheiten 6, 51 bzw. Querführungsträgern 41, 52 zum wenigstens einen Befestigungselement 38a an der Schieberbasis 37 passen, vorzugsweise durch Löcher für Schrauben gebildet sind.

Auch der zweite Querführungsträger 52 weist beim Ausführungsbeispiel eine Fußplatte 41a mit Befestigungselementen 38b auf, die für einen Austausch der Querführungseinheiten 6 bzw. 51 bzw. Querführungsträger 41 bzw. 52 zu der Schieberbasis 37 passen und montierbar sind, vorzugsweise mit der Fußplatte 41a des ersten Querführungsträgers 41 identisch sind.

Der zweite Querführungsträger 52 ist somit durch einen vom tragenden Führungsträger Ft getragenen zweiten Führungsträger Ft2 gebildet.

Die zweite Querführung 53 ist durch wenigstens zwei auf beiden Seiten der Längsmittelebene E1 angeordnete vertikale Führungsstangen 55 gebildet, die beim Ausführungsbeispiel auf der Fußplatte 41a befestigt sind und von dieser nach oben ragen sowie an ihren oberen Enden durch eine Quertraverse 55a stabilisiert sind.

Es ist denkbar, auch den zweiten Halter 54 mit einem sich zwischen den vertikalen Führungsstangen 55 durchgehend erstreckenden Körper auszubilden. Im Rahmen der Erfindung ist es deshalb möglich, den zweiten Halter 54 durch den an einer Seite der Vorrichtung 1 angeordneten Querantrieb 16 vertikal zu bewegen, wobei der zweite Halter 54 in seinem außenseitigen Endbereich, vorzugsweise im unteren außenseitigen Endbereich, ein zugehöriges Gelenkelement, z. B. ein Gelenkloch, für das zweite Gelenk 26 aufweist, durch das der Querantrieb 16 mit dem zweiten Halter 54 gelenkig verbunden werden kann, vorzugsweise durch eine Gelenkschwinge 25, die sich in einer wenigstens annähernd aufrechten Position befindet, um vertikale Schub- und Zugkräfte auf den zweiten Halter 54 übertragen zu können.

Wegen der bezüglich der ersten Querführung 7 unterschiedlichen, nämlich vertikalen oder annähernd vertikalen, Stellung der Gelenkschwinge 25 für den zweiten Halter 54 weist der Querantrieb 16 ein zweites, vorzugsweise durch das schwenkteilseitige Gelenkelement, z. B. durch einen zweiten Gelenkbolzen 24a bzw. Gelenkloch 24b, gebildetes Verbindungselement Vb zum Montieren des ersten Gelenks 24 für den zweiten Halter 54 auf. Das zweite Verbindungselement Vb ist bezüglich dem ersten Verbindungselement Va in der zum Durchgang 14 hin gerichteten Umfangsrichtung um die Schwenkachse 21 versetzt und im radialen Abstand y von dieser angeordnet. Die beiden Verbindungselemente Va, Vb schließen einen Winkel W zwischen sich ein, der zum Durchgang 14 hin offen ist und z. B. etwa um 90° betragen kann, wobei er stumpf, rechtwinklig oder auch spitz sein kann.

Beim Ausführungsbeispiel ist das zweite Verbindungselement Vb an einem zweiten Schwenkhebel 19b angeordnet, der quer zum ersten Schwenkhebel 19a von diesem oder von der Nabe 36 absteht und z. B. kürzer sein kann als der erste Schwenkhebel 19a. D. h., der radiale Abstand y des Verbindungselements Vb von der Schwenkachse 21 kann gleich oder kleiner sein als der radiale Abstand x des Verbindungselements Va.

Um einen Austausch der Halter 8 und 54 zu erleichtern, ist es zur Verbesserung der Montage bzw. Demontage vorteilhaft, die von den schwenkteilseitigen Verbindungselementen Va, Vb und den damit korrespondierenden schwingenseitigen Verbindungselementen gebildeten Verbindungen als schnell lösbare sogenannte Schnellschlussverbindungen Sa, Sb auszubilden, die handhabungsfreundlich und schnell lösbar und wieder montierbar sind, so dass der Austausch der Halter 8, 54 auch bezüglich des jeweils zugehörigen ersten Gelenks 24 handhabungsfreundlich und schnell erfolgen kann.

Die Schnellverbindungen Sa, Sb können z. B. durch eine Klemmvorrichtung 56 gebildet sein, mit der der Gelenkbolzen 24a im Gelenkloch 24b des Schwenkteils 19 bzw. Schwenkhebels 19a bzw. 19b klemmbar ist. Hierzu kann der das Gelenkloch 24b aufweisende Bereich durch einen vom Gelenkloch 24b nach außen ausmündenden Schlitz 57 geschlitzt sein, wobei mittels einer sich quer zum Schlitz 57 in den Bereich eingeschraubten Schraube (in Fig. 1 dargestellt) der Gelenkbolzen 24a im Bolzenloch 24b klemmbar ist.

Wie bereits beim Ausführungsbeispiel gemäß Fig. 1 bis 5 ist auch bei den übrigen Ausführungsbeispielen zwischen dem Halter 8 bzw. 54 und dem Querantrieb 16 eine zweite Längsführung 45 vorhanden, um die vor und zurück gerichtete Längsbewegung des Längsführungsschiebers 4 bei der Antriebsverbindung mit dem sich nicht längs bewegbaren Querantrieb 16 zu gewährleisten. Eine solche zweite Längsführung 45 kann auch bei diesem Ausführungsbeispiel zwischen dem Schwenkteil 19 bzw. dem oder den einen Längsabstand L2 voneinander aufweisenden Schwenkhebeln 19b und der Gelenkschwinge 25 vorgesehen sein, wobei der Gelenkbolzen 24a als längs gerichtete Führungsstange fungieren kann, wie es Fig. 3, 5, 7 und 9 in entsprechender Weise zeigen, und wobei auch die Gelenkschwinge 25 länglich ausgebildet ist, siehe L4.

Es ist im Rahmen der Erfindung möglich, nur eine Gelenkschwinge 25 vorzusehen, die wahlweise mit dem ersten Halter 8 und dem ersten Kurbelgelenk Ga oder mit dem zweiten Halter 54 und dem zweiten Kurbelgelenk Gb verbindbar ist.

Beim vorliegenden Ausführungsbeispiel sind zwei Gelenkschwingen 25 vorgesehen, nämlich zwei unterschiedlich lange Gelenkschwingen 25, von denen die kürzere für die Verbindung des ersten Halters 8 mit dem ersten Kurbelgelenk Ga und die längere für die Verbindung des zweiten Halters 54 mit dem zweiten Kurbelgelenk Gb vorgesehen ist.

Im Rahmen der Erfindung ist es zwecks Erleichterung des Austausches auch vorteilhaft, eine Schnellverbindung zwischen dem ersten oder zweiten Halter 8, 54 und der oder den zugehörigen Gelenkstangen bzw. Gelenkschwingen 25 vorzusehen, vorzugsweise im Gelenk 26.

Bei den Ausführungsbeispielen gemäß den Fig. 6 bis 9 ist der zweite Halter 54 durch zwei separate Haltekörper 54a gebildet, die auf beiden Seiten der Längsmittelebene E1 an den Führungsstangen 55 mittels Führungsstücken 42b mit Führungsrollen 42c vertikal bewegbar geführt sind. Die Führungskörper 54a, die z. B. durch quer und hochkant angeordnete Scheibenkörper gebildet sind, können nach oben konvergent ausgebildet sein, wie es Fig. 6 und 8 zeigen. Die Führungskörper 54a weisen in ihren einander zugewandten Endbereichen jeweils eine oder mehrere längs hintereinander angeordnete Befestigungsvorrichtungen 9a zum Befestigen der Enden eines oder mehrerer sich z. B. etwa horizontal erstreckender Schneidedrähte 9 auf. Die Befestigungsvorrichtungen 9a sind vorzugsweise in den unteren einander zugewandten Endbereichen der Haltekörper 54a angeordnet, die bezüglich der vertikalen Längsmittelebene E1 vorzugsweise spiegelsymmetrisch angeordnet und ausgebildet sind. Die Fig. 6 und 8 zeigen die Haltekörper 54 a mit durchgezogenen Linien in ihrer unterer Hubendstellung, in der der Schneidedraht 9 sich unterhalb der Tragfläche des Trägers 13 bzw. Längsförderers befindet. Die obere Hubendstellung des zweiten Halters 54 bzw. der Haltekörper 54a, in der der Schneidedraht sich über dem Strang 12 befindet, ist strichpunktiert angedeutet.

Auch bei den Ausführungsbeispielen mit einer vertikalen Querführung 53 können die Haltekörper 54a in der Längsrichtung der Vorrichtung 1 kurz ausgebildet sein, z. B. mit sich quer erstreckenden scheibenförmigen Haltekörpern 54a, um z. B. der Befestigung nur eines Schneidedrahtes 9 zu dienen.

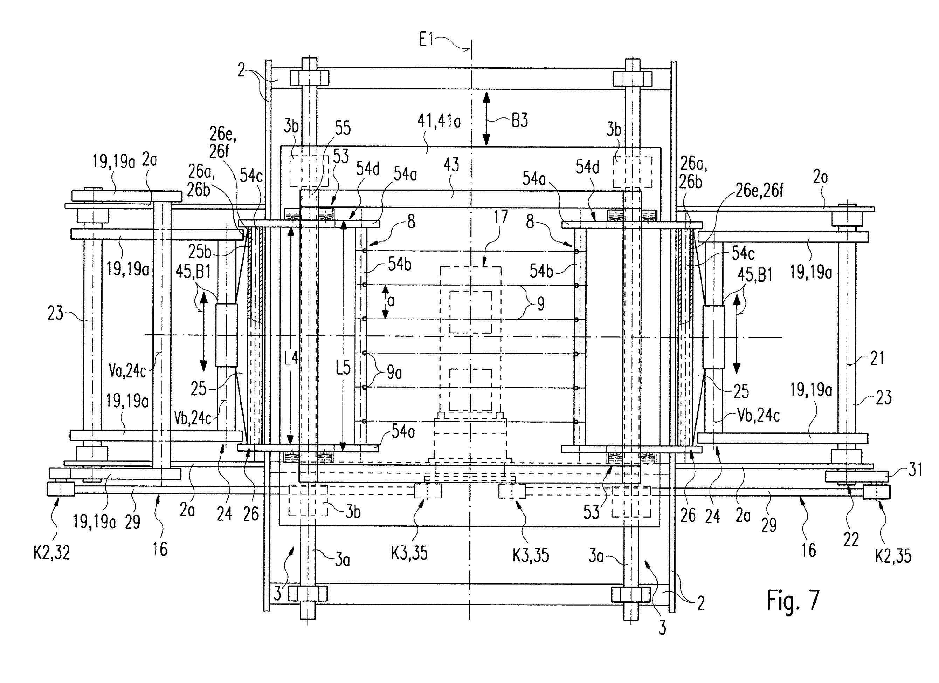

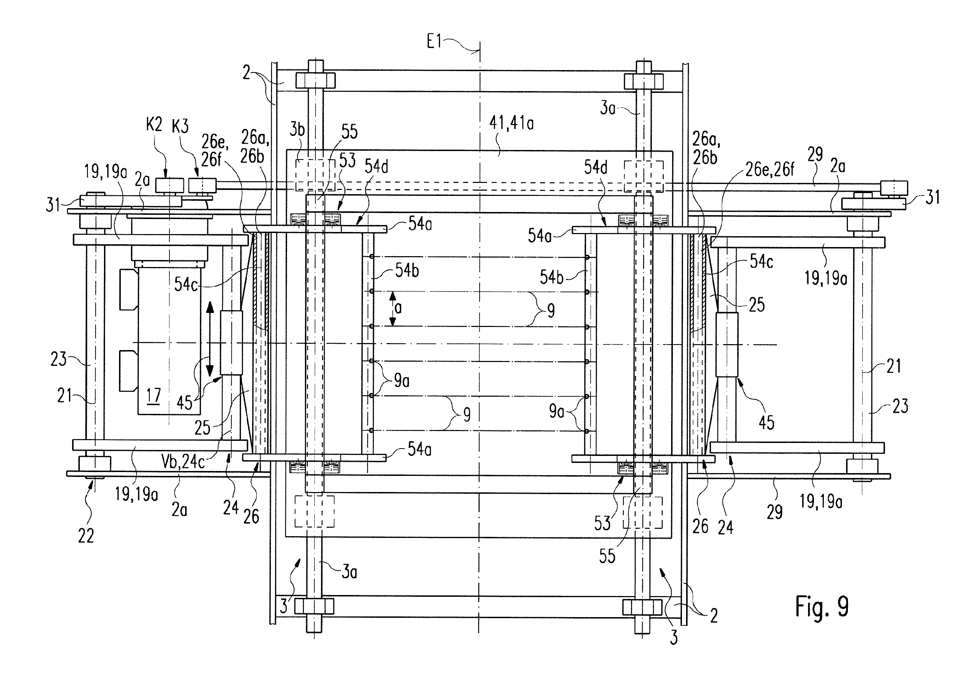

Für mehrere, z. B. in einer Längsreihe R angeordnete Schneidedrähte 9 sind die Haltekörper 54a länglich ausgebildet, siehe L5 in Fig. 7 und 9. Bei diesen Ausführungsbeispielen ist die längliche Ausgestaltung dadurch geschaffen, dass jeweils zwei einen Längsabstand voneinander aufweisende Haltekörper 54a in Form von sich quer erstreckenden Scheiben bzw. Platten durch Längsstreben 54b, 54c miteinander verbunden sind, die vorzugsweise an den inneren und äußeren Enden der scheibenförmigen Haltekörper 54a angeordnet sind und beide scheibenförmigen Haltekörper 54a zu einer Haltekörpereinheit miteinander verbinden. Die äußere Längsstrebe 54c ist vorzugsweise durch eine im Querschnitt runde Gelenkstange gebildet, auf der die zugehörige Gelenkschwinge 25 mit einer Gelenkbuchse 25b schwenkbar gelagert ist. Die Außenmantelfläche 26c der Gelenkstange 26b und die darauf quer durch eine runde Gelenkstange gebildeten Längsstrebe 54c und die Innenmantelfläche 26d der Gelenkbuchse 25b bilden jeweils längs im wesentlichen durchgehende (siehe L4) Gelenkflächen, die Stütz- bzw. Gleitflächen geringer Flächenpressung bilden und eine stabile, insbesondere kippsichere Abstützung der Haltekörper 54a bzw. Haltekörpereinheiten sowie bei geringem Verschleiß eine lange Lebensdauer gewährleisten.

Die innere Längsstrebe 54b weist in den Längsabständen a voneinander die Befestigungsvorrichtungen 9a für die Schneidedrähte 9 auf.

Insbesondere beim Vorhandensein von zwei separaten Haltekörpern 54a ist auf beiden Seiten der Längsmittelebene E1 jeweils ein Querantrieb 16 angeordnet, wobei die Querantriebe 16 die Haltekörper 54a bzw. Haltekörpereinheiten vertikal bewegen und dabei jeweils in etwa gleicher stabiler Höhenposition halten, wodurch jeweils ein stabiler vertikaler Querantrieb gebildet ist. Der beiderseitige jeweilige Querantrieb ist erforderlich, da die beiden einander gegenüberliegenden Haltekörper 54a bzw. Haltekörpereinheiten 54d nur durch den bzw. die Schneidedrähte 9 miteinander verbunden sind und deshalb jeweils eines eigenen Querantriebs 16 bedürfen.

Beim Ausführungsbeispiel ist der rechte Querantrieb 16 prinzipiell gleich und bezüglich der vertikalen Längsmittelebene E1 spiegelsymmetrisch angeordnet und ausgebildet, nämlich mit einem im Schwenklager 22 quer schwenkbar gelagerten Schwenkteil 19, z. B. dem Schwenkhebel 19b, der durch eine zugehörige Gelenkschwinge 25 und das zweite Kurbelgelenk Gb und das zweite Gelenk 26 mit dem zugehörigen Haltekörper 54a bzw. Haltekörpereinheit verbunden ist.

Der linke und der rechte Querantrieb 16 bewegen sich seitlich gegensinning und vertikal gleichsinnig, wobei die Kurbelgelenke 35 der Kurbelstangen 29 in ihren aufeinander zu bewegten Positionen sich gemäß Fig. 2 jeweils auf der dem zugehörigen Querantrieb 16 gegenüberliegenden Seite der Kurbelscheibe 34 sich in einer Höhe befinden. Um dies zu ermöglichen, sind die Kurbelstangen 29 gemäß Fig. 1, 2 und 6 seitlich ausgeformt, z. B. abgebogen oder abgewinkelt, so dass die Kurbelstangen 29 mit dem jeweils anderen Gelenk 35 nicht zusammen stoßen.

Das erste Verbindungselement Va am Schwenkteil 19 bzw. am aufrechten Schwenkhebel 19a ist beim rechten Querantrieb 16 nicht erforderlich, weil der rechte Querantrieb 16 nur der aufrechten Antriebsbewegung des rechten bzw. zugehörigen Haltekörpers 54a bzw. der rechten bzw. zugehörigen Haltekörpereineinheit dient.

Beim Ausführungsbeispiel gemäß Fig. 6 und 7 ist der in diesem Falle für beide seitlichen Querantriebe 16 gemeinsame Antriebsmotor 17 mittig am bzw. im Gestell 2 angeordnet, wie es auch Fig. 1 zeigt.

Beim Ausführungsbeispiel gemäß Fig. 8 und 9 ist der gemeinsame Antriebsmotor 17 außermittig auf einer Seite der vertikalen Längsmittelebene E1 angeordnet, wie es bereits beim Ausführungsbeispiel gemäß Fig. 5 beschrieben worden ist. Bei diesen Ausführungsbeispielen kann die sich von der einen zur anderen Seite der Vorrichtung 1 erstreckende Kurbelstange 29 gerade ausgebildet sein, wobei sie bezüglich der Anlenkung der kurzen Kurbelstange 29 um 90° verdreht am Kurbelhebel 34 im zugehörigen Gelenk 35 verbunden ist, und wobei das Gelenk 35 der kurzen Hebelstange 29 in ihrer Stellung gemäß Fig. 4 und 8 sich unten befindet. Um bei dieser Ausgestaltung ein Drehen des Kurbelhebels 35 um etwa 90° zu gewährleisten, sind die kurze und die lange Kurbelstange 29 in zwei einen Längsabstand voneinander aufweisenden Vertikalebenen angeordnet und mit dem Kurbelhebel 34 vorhanden. Es ist deshalb auch bei dieser Ausgestaltung möglich, den Kurbelhebel 34 um 90° zu schwenken, ohne dass die kurze und die lange Kurbelstange 29 bzw. deren Gelenke 35 miteinander kollidieren. Beim Ausführungsbeispiel ist die lange Kurbelstange 29 in einem größeren axialen Abstand vom Kurbelhebel 34 angeordnet als die kurze Kurbelstange 29, so dass diese mit ihrem Gelenk 35 zwischen dem Kurbelhebel 34 und der langen Kurbelstange 29 angeordnet ist.

Das Ausführungsbeispiel gemäß Fig. 9 ist nur für einen vertikalen Querantrieb 16 eingerichtet, da die aufrechten Schwenkhebel 19a fehlen.

Im Rahmen der Erfindung kann der für horizontales Schneiden vorgesehene Halter 8 auch anders ausgebildet sein, wie die Ausgestaltung gemäß Fig. 1 bis 3. Anstelle von mehreren inneren U-förmigen Schenkelabschnitt-Paaren brauchen nur zwei äußere U-förmige Schenkelabschnitt-Paare gemäß Fig. 4 und 5 vorgesehen sein, von denen die oberen und unteren Schenkelabschnitte 8c jeweils durch eine Längsstrebe 8e fest miteinander verbunden sind, z. B. lösbar oder unlösbar, so dass eine obere und eine untere Längsstrebe 8e vorhanden ist, an denen die jeweils in Längsabständen a voneinander angeordneten Befestigungsvorrichtungen 9a für die Schneidedrähte angeordnet sind. Fig. 5 zeigt die Längsstreben 8e in der einen bzw. inneren Hubeinstellung auf der einen Seite der Längsmittelebene E1 und in Strichpunktlinien in der gegenüberliegenden Hubeinstellung auf der anderen Seite der Längsmittelebene E1.

## Patentansprüche

1. Vorrichtung (1) zum Schneiden eines Stranges (12) aus plastisch verformbaren Material, insbesondere Ton oder dergleichen Material, mit
- einem sich längs durch einen Durchgang (14) der Vorrichtung (1) erstreckenden Träger (13) zum Bewegen des Stranges (12) längs durch den Durchgang (14),
- einer Längsführung (3), an der ein Längsführungsschieber (4) durch einen Längsantrieb (5) vor und zurück verschiebbar geführt ist,
- einer am Längsführungsschieber (4) angeordneten ersten Querführung (7),
- und einem ersten Halter (8) für wenigstens einen Schneidedraht (9) zum quer zum Durchgang (14) gerichteten Schneiden des Stranges (12),
- wobei der erste Halter (8) durch einen Querantrieb (16) in der ersten Querführung (7) hin und her verschiebbar geführt ist,
**dadurch gekennzeichnet,**
- **dass** der Querantrieb (16) umbaubar ist für ein Verschieben eines zweiten Halters (54) in einer zweiten Querführung (53), die quer zur ersten Querführung (7) gerichtet ist.

2. Vorrichtung nach Anspruch 1,
**dadurch gekennzeichnet,**
**dass** die erste Querführung (7) an einem ersten Querführungsträger (41) angeordnet ist und die zweite Querführung (53) an einem zweiten Querführungsträger (52) angeordnet ist und die Querführungsträger (41, 52) austauschbar sind.

3. Vorrichtung nach Anspruch 1 und 2,
**dadurch gekennzeichnet,**
**dass** der Querantrieb (16) wenigstens eine Gelenkstange (25) aufweist, die für den Antrieb der Halter (8, 54) zwischen einer etwa horizontalen und einer vertikalen Stellung umbaubar ist.

4. Vorrichtung nach Anspruch 3,
**dadurch gekennzeichnet,**
**dass** zwei unterschiedlich lange Gelenkstangen (25) vorgesehen sind, wobei vorzugsweise die kürzere Gelenkstange (25) in der etwa horizontalen Stellung und die längere in der etwa vertikalen Stellung montierbar ist.

5. Vorrichtung nach Anspruch 3 oder 4,
**dadurch gekennzeichnet,**
- **dass** der Querantrieb (16) ein Schwenkteil (19) aufweist, das in einem Schwenklager (22) um eine Schwenkachse (21) schwenkbar gelagert ist, die sich parallel zur Durchgangsachse (14a) erstreckt
- und in einem sich quer zur Bewegungsrichtung (B2) des ersten Halters (8) gerichteten Abstand (x) von der Schwenkachse (21) ein erstes Verbindungselement (Va) zum lösbaren Verbinden der Gelenkstange (25) in einem ersten Kurbelgelenk (Ga) aufweist,
- und in einem sich etwa parallel zur ersten Querführung (7) erstreckenden Abstand (y) von der Schwenkachse (21) ein zweites Verbindungselement (Vb) zum lösbaren Verbinden der Gelenkstange (25) in einem zweiten Kurbelgelenk (Gb) aufweist,
- wobei zwischen den Verbindungselementen (Va, Vb) ein sich in einer vertikalen Querebene erstreckender Winkel (W) von etwa 90° eingeschlossen ist, der zum Durchgang (14) offen ist.

6. Vorrichtung nach Anspruch 5,
**dadurch gekennzeichnet,**
**dass** die Schwenkachse (21) im unteren äußeren Endbereich des Bewegungsbereichs des ersten Halters (8) oder unter dem Bewegungsbereich des ersten Halters (8) angeordnet ist.

7. Vorrichtung nach Anspruch 5 oder 6,
**dadurch gekennzeichnet,**
**dass** die Verbindungselemente (Va, Vb) jeweils Teile einer Schnellschlussverbindung (Sa, Sb) sind, die z. B. durch eine Steck- oder Klemmvorrichtung (56) gebildet ist.

8. Vorrichtung nach einem der Ansprüche 5 bis 7,
**dadurch gekennzeichnet,**
**dass** das Schwenkteil (19) durch zwei sich in der Schwenkebene quer zueinander erstreckende Schwenkhebel (19a, 19b) gebildet ist, die die Verbindungselemente (Va, Vb) in ihren freien Endbereichen aufweisen.

9. Vorrichtung nach einem der vorherigen Ansprüche,
**dadurch gekennzeichnet,**
**dass** die Halter (8, 54) in der Längsrichtung der Vorrichtung (1) länglich ausgebildet sind und mehrere in der Längsrichtung hintereinander angeordnete Befestigungsvorrichtungen (9a) für mehrere Schneidedrähte (9) aufweisen, wobei das zweite Gelenk durch zwei einen Längsabstand (L4) aufweisende Gelenke (26e, 26f) gebildet sind oder sich im wesentlichen über die gesamte Länge (L4) der Gelenkschwinge (25) erstreckende Gleitflächen (26c 26d) aufweist.

10. Vorrichtung (1) zum Schneiden eines Stranges (12) aus plastisch verformbaren Material, insbesondere Ton oder dergleichen Material, mit
- einem sich längs durch einen Durchgang (14) der Vorrichtung (1) erstreckenden Träger (13) zum Bewegen des Stranges (12) längs durch den Durchgang (14),
- einer Längsführung (3), an der ein Längsführungsschieber (4) durch einen Längsantrieb (5) vor und zurück verschiebbar geführt ist,
- einer am Längsführungsschieber (4) angeordneten ersten Querführung (7),
- und einem ersten Halter (8) für wenigstens einen Schneidedraht (9) zum quer zum Durchgang (14) gerichteten Schneiden des Stranges (12),
- wobei der erste Halter (8) durch einen Querantrieb (16) in der ersten Querführung (7) hin und her verschiebbar geführt ist,
- und wobei der Querantrieb (16) eine Gelenkstange aufweist, die durch ein erstes Gelenk (24) mit einem Schwenkteil (19) und durch ein zweites Gelenk (26) mit dem Halter (8; 54) verbunden ist,
- oder Vorrichtung nach einem der vorherigen Ansprüche,
**dadurch gekennzeichnet,**
- **dass** der Halter (8, 54) mehrere in der Längsrichtung hintereinander angeordnete Befestigungsvorrichtungen (9a) für mehrere Schneidedrähte (9) aufweist,
- **dass** die Gelenkstange (25) als eine in der Längsrichtung der Vorrichtung (1) längliche Längsschwinge ausgebildet ist,
- und **dass** das zweite Gelenk (26) durch zwei einen Längsabstand (L4) aufweisende Gelenke (26e, 26f) gebildet ist oder sich im wesentlichen über die gesamte Länge (L4) der Gelenkschwinge (25) erstreckende Gleitflächen (26c, 26d) aufweist.

11. Vorrichtung nach Anspruch 9 oder 10,
**dadurch gekennzeichnet,**
**dass** das zweite Gelenk (26) durch einen sich im wesentlichen über die gesamte Länge (L4) des Halters (8) oder der Gelenkschwinge (25) erstreckenden Gelenkbolzen (26b) an dem einen Teil (Halter (8) oder Gelenkschwinge (25)) und eine auf dem Gelenkbolzen (26b) drehbar gelagerte Gelenkbuchse (25b) am anderen Teil (Halter (8) oder Gelenkschwinge (25)) gebildet ist.

12. Vorrichtung nach einem der vorherigen Ansprüche,
**dadurch gekennzeichnet,**
**dass** in der mechanischen Verbindung zwischen dem Querantrieb (16) und dem jeweils zugehörigen Halter (8; 54) eine zweite Längsführung (45) angeordnet ist, die vorzugsweise in das Gelenk (24) zwischen dem Schwenkteil (19) und der Gelenkschwinge (25) integriert ist.

13. Vorrichtung nach einem der Ansprüche 10 bis 12,
**dadurch gekennzeichnet,**
**dass** die erste Querführung (7) an einem ersten Querführungsträger (41) angeordnet ist und die zweite Querführung (53) an einem zweiten Querführungsträger (52) angeordnet ist und die Querführungsträger (41, 52) austauschbar sind.

14. Vorrichtung (1) zum Schneiden eines Stranges (12) aus plastisch verformbaren Material, insbesondere Ton oder dergleichen Material, mit
- einem sich längs durch einen Durchgang (14) der Vorrichtung (1) erstreckenden Träger (13) zum Bewegen des Stranges (12) längs durch den Durchgang (14),
- einer Längsführung (3), an der ein Längsführungsschieber (4) durch einen Längsantrieb (5) vor und zurück verschiebbar geführt ist,
- und einer am Längsführungsschieber (4) angeordneten ersten Querführung (7), an der ein erster Halter (8) für einen Schneidedraht (9) zum quer gerichteten Schneiden des Stranges (12) durch einen Querantrieb (16) hin und her verschiebbar geführt ist,
- oder Vorrichtung nach einem der vorherigen Ansprüche,
**dadurch gekennzeichnet,**
- **dass** ein die erste Querführung (7) aufweisender erster getragener Führungsträger (Ft1) und ein diesen tragender Führungsträger (Ft) durch eine zwischen Ihnen verlaufende Teilungsfuge (39) geteilt und durch eine lösbare Befestigungsvorrichtung (38) miteinander verbunden sind, die miteinander korrespondierende Befestigungselemente (38a, 38b) am tragenden Führungsträger (Ft) und am ersten getragenen Führungsträger (Ft1) aufweist,
- und **dass** der tragende Führungsträger (Ft) wenigstens ein Befestigungselement (38a) zum lösbaren Befestigen eines zweiten getragenen Führungsträgers (Ft2) mit einer zweiten Querführung (53) für einen zweiten Halter (54) aufweist, wobei die zweite Querführung (53) quer zur ersten Querführung (7) gerichtet ist.

15. Vorrichtung nach Anspruch 14,
**dadurch gekennzeichnet,**
**dass** das wenigstens eine Befestigungselement (38a) am tragenden Führungsträger (Ft) zum Befestigen des ersten getragenen Führungsträgers (Ft1) und das wenigstens eine Befestigungselement (38a) am tragenden Führungsträger (Ft) zum Befestigen des zweiten getragenen Führungsträgers (Ft2) durch ein gemeinsames Befestigungselement gebildet sind.

16. Vorrichtung nach Anspruch 14 oder 15,
**dadurch gekennzeichnet,**
**dass** der tragende Führungsträger (Ft) durch eine Längsführungsschieberbasis (37) gebildet ist, die an der Längsführung (3) vor und zurück verschiebbar ist, und der erste getragene Führungsträger (Ft1) durch einen Längsführungsschieberaufsatz (41a) gebildet ist.

17. Vorrichtung nach einem der vorherigen Ansprüche 14 bis 16,
**dadurch gekennzeichnet,**
**dass** auf beiden Seiten der vertikalen Längsmittelebene (E1) der Vorrichtung (1) jeweils ein oder mehrere, in der Längsrichtung hintereinander angeordnete und miteinander korrespondierende Befestigungselemente (38a, 38b) angeordnet sind.

18. Vorrichtung nach einem der vorherigen Ansprüche 14 bis 17,
**dadurch gekennzeichnet,**
**dass** das oder die Befestigungselemente (38a, 38b) durch Löcher für Schrauben gebildet sind.

19. Vorrichtung nach einem der vorherigen Ansprüche 14 bis 18,
**dadurch gekennzeichnet,**
**dass** die Teilungsfuge (39) horizontal verläuft.

20. Vorrichtung nach einem der vorherigen Ansprüche 14 bis 19,
**dadurch gekennzeichnet,**
**dass** die Längsführungsschieberbasis (37) ein sich in der Querrichtung horizontal erstreckendes leistenförmiges Tragteil und/oder die getragenen Führungsträger (Ftl, Ft2) ein sich in der Querrichtung erstreckendes leistenförmiges oder plattenförmiges Fußteil aufweisen.

21. Vorrichtung nach einem der vorherigen Ansprüche 14 bis 20,
**dadurch gekennzeichnet,**
**dass** die erste Querführung (8) horizontal gerichtet ist und die zweite Querführung (53) vertikal gerichtet ist.

22. Vorrichtung nach einem der vorherigen Ansprüche,
**dadurch gekennzeichnet,**
**dass** der Querantrieb (16) von einem Antriebsmotor (17) antreibbar ist oder das beide Querantriebe (16) von einem gemeinsamen Antriebsmotor (17) antreibbar sind, wobei der oder der gemeinsame Antriebsmotor (17) vorzugsweise auf einer Seite oder etwa mittig zwischen den Querantrieben (16) an der Vorrichtung angeordnet ist.

23. Vorrichtung, insbesondere nach einem der vorherigen Ansprüche,
**dadurch gekennzeichnet,**
**dass** der erste Halter (8) - in der Längsrichtung der Vorrichtung (1) gesehen - die Form eines U, insbesondere eines seitlich gekippten U, aufweist.

24. Vorrichtung nach Anspruch 23,
**dadurch gekennzeichnet,**
**dass** vordere und hintere Haltearme (8c) des Halters (8) durch obere und untere Längsstreben (8e) miteinander verbunden sind, an denen in einem in der Längsrichtung gerichtetem Abstand (a) voneinander angeordnete Befestigungsvorrichtungen (9a) für Schneidedrähte (9) vorgesehen sind.

25. Vorrichtung, insbesondere nach einem der vorherigen Ansprüche,
**dadurch gekennzeichnet,**
**dass** der zweite Halter (54) durch zwei auf beiden Längsseiten der Vorrichtung (1) angeordnete Haltekörper (54a) gebildet ist, die in vertikalen Querführungen (53) durch zwei auf beiden Seiten der Vorrichtung (1) angeordnete Querantriebe (16) verschiebbar sind und an ihren einander zugewandten Seiten eine oder mehrere in einem Längsabstand (a) voneinander angeordnete Befestigungsvorrichtungen (9a) für Schneidedrähte (9) aufweisen.

26. Vorrichtung nach Anspruch 25,
**dadurch gekennzeichnet,**
**dass** die Haltekörper (54a) vordere und hintere scheiben- oder leistenförmige Haltekörperteile aufweisen, die in ihren der Längsmittelebene (E1) zugewandten Endbereichen jeweils durch eine Längsstrebe (54b) miteinander verbunden sind, an der mehrere Befestigungsvorrichtungen (9a) für Schneidedrähte (9) angeordnet sind, die einen in der Längsrichtung gerichteten Abstand (a) voneinander aufweisen.

27. Vorrichtung nach Anspruch 25 oder 26,
**dadurch gekennzeichnet,**
**dass** die Haltekörper (54a) vordere und hintere Haltekörperteile aufweisen, die in ihren der Längsmittelebene (E1) abgewandten Endbereichen jeweils durch eine Längsstrebe, insbesondere runden Querschnitts, miteinander verbunden sind, die vorzugsweise einen Gelenkbolzen (26b) für ein Gelenk (26) zur Verbindung einer Gelenkschwinge (25) bildet.

28. Vorrichtung nach einem der Ansprüche 25 bis 27,
**dadurch gekennzeichnet,**
**dass** die Querantriebe (16) bezüglich der vertikalen Längsmittelebene (E1) vorzugsweise spiegelbildlich zueinander angeordnet und ausgebildet sind, wobei vorzugsweise der Querantrieb (16) für den zweiten Halter (54) nur das Verbindungselement (Vb) für den vertikalen Querantrieb aufweist.

29. Vorrichtung nach einem der vorherigen Ansprüche,
**dadurch gekennzeichnet,**
**dass** der Querantrieb (16) für monodirektionales Schneiden immer nach einer Seite hin eingerichtet ist oder für bidirektionales Schneiden abwechselnd nach beiden Seiten hin eingerichtet ist.
